Europäisches Patentamt

(19) European Patent Office

Office européen des brevets

(11) Publication number: **0 281 558**
**B1**

(12) # EUROPEAN PATENT SPECIFICATION

(45) Date of publication of patent specification: **24.10.90**

(51) Int. Cl.$^5$: **B 62 K 21/12**

(21) Application number: **86906336.2**

(22) Date of filing: **08.11.86**

(86) International application number:
**PCT/EP86/00645**

(87) International publication number:
**WO 87/02956 21.05.87 Gazette 87/11**

(54) BICYCLE HANDLEBAR, PARTICULARLY FOR A RACING BICYCLE.

(30) Priority: **15.11.85 IT 2383685**

(43) Date of publication of application:
**14.09.88 Bulletin 88/37**

(45) Publication of the grant of the patent:
**24.10.90 Bulletin 90/43**

(84) Designated Contracting States:
**AT BE CH DE FR GB IT LI LU NL SE**

(56) References cited:
**EP-A-0 053 404**
**FR-A-2 476 557**
**FR-A-2 535 669**

(73) Proprietor: **MODOLO ADAMO & C.S.N.C.**
**Via Vanizza 21**
**I-31023 Sarano di S. Lucia di Piave (IT)**

(72) Inventor: **MODOLO, Domenico**
**Via Ippolito Nievo, 1**
**I-31015 Conegliano (IT)**

(74) Representative: **Dr. Ing. A. Racheli & C.**
**Viale San Michele del Carso, 4**
**I-20144 Milano (IT)**

EP 0 281 558 B1

Courier Press, Leamington Spa, England.

## Description

The present invention refers to a bicycle handlebar, particularly for a racing bicycle.

The grip of a handlebar, in particular of sport and racing bicycles is generally carried out with a tube having a single radius bending. The palm of the hand must thus adhere to this bending: it will therefore lay on the two ends leaving an empty space in the central part. This causes a thickening of the skin at the extremities of the palm, as well as skin irritations and in general an effort and a contraction of the hand and wrist muscles. This state of tension jeopardizes driving safety and requires in general an increased effort on the part of the rider, coming even to prevent perfect control of the bicycle.

The patent application FR—A—2 535 669 discloses a bicycle handlebar consisting of a central part bended in several points at the ends of which terminal adjustable portions are provided. Each terminal portion has two opposite bends which form a point of inflection in the connecting zone with the handlebar central part. These end portions can take different positions with respect to the central part of the handlebar, but in any case the cyclist's hand can only rest on a bended zone.

US—A—366 775 describes a handle consisting of an egg-shaped body following as near as possible the cyclist's hand. The construction of this grip is extremely expensive. Moreover the cyclist has often to change his positin and his grip does not allow the cyclist's hand to turn with respect to the resting axis. A rotation could in fact result in his hands resting on a humpy or depressed zone, which would be very uncomfortable.

The aim of the present invention is to carry out a handlebar which eliminates any uneven effort on the part of the cyclist.

The aforesaid aim has been achieved as specified in claim 1, in particular a handlebar is foreseen which has, besides a horizontal portion apt to be engaged in the lug, also a concave zone bent towards the rider, said zone having in a first portion in front of the hand grip, that is in front of the thumb, a very small bending radius, and in the portion behind the hand, that is near the little finger a bending of much wider radius, i.e. about double with respect to the previous one, while between these two zones a rectilinear portion bent of about 35—55° as regards to a vertical plane is foreseen, which extends for a distance almost equal to the width of the rider's palm.

The present invention will be better illustrated on the basis of an exemplary embodiment which is shown in the enclosed drawings, where:

Fig. 1 is a top view of the proposed bicycle handlebar; and

Fig. 2 is a side view of the same handlebar.

With reference of the drawings it will be noted that the proposed handlebar 10 is formed by a central fixing portion 11 which will be inserted in the lug of a bicycle and by two lateral sides 12 and 13 which are bent forward and then downward.

The forward bending is totally traditional; the subject of the invention concerns the bending of the bar in a vertical plane from top towards bottom so as to form a shaped cavity 17 turned towards the rider and capable of receiving his hands.

This cavity 17 is carried out by means of a succession of three portions linked one with the other; a first bent portion 14 has a very small radius r; a second rectilinear portion 16, has an inclination comprised between 35° and 55° as regards to the vertical; this portion is adjacent to the first bent portion 14; finally a third portion 15, has an ample bending radius R which is about double than the previous radius r and is also adjacent to the second portion. Normally the handlebar terminates with an end portion 18 almost horizontal.

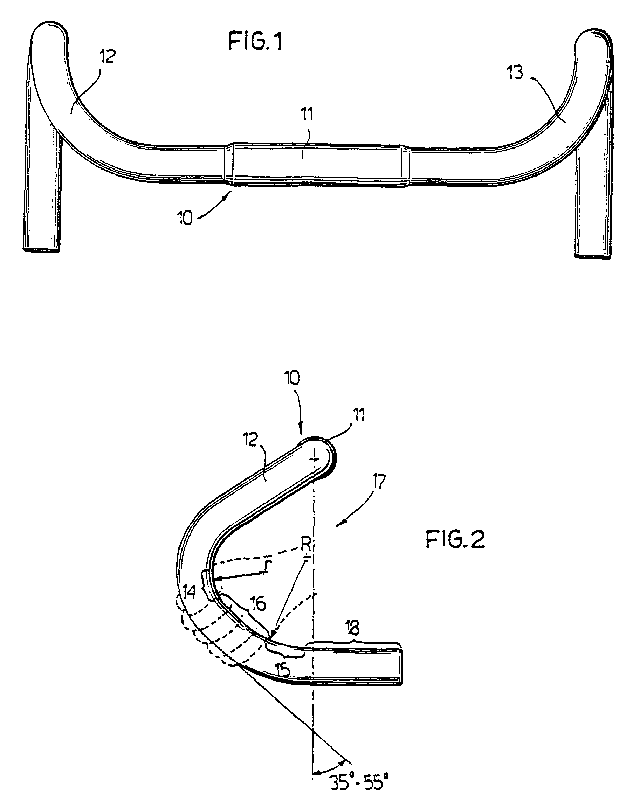

As it will be noted from Fig. 2 the hand of the rider can thus lay comfortably in the zone 16 where the axis of the tube is almost rectilinear.

## Claims

1. A bicycle handlebar formed by a central portion (11); apt to be engaged in the lug and by two tubular ends each of them having a concave zone facing the rider who rests his hands thereupon when he is making an effort characterized in that said concave zone is downwardly directed and shaped as follows: it has a first portion (14) nearer to the central portion (11) having a small bending radius (r), a second rectilinear portion (16) joined to the first one, then a third portion (15) joined to the second one and forming a much wider bending radius (R), that is nearly double than the previous one, the rectilinear portion (16) extending for a distance almost equal to the width of the rider's hand.

2. A handlebar according to claim 1, characterized in that the rectilinear portion forms an angle comprised beween 35° and 55° as regards to a vertical line.

## Patentansprüche

1. Fahrradlenkstange, gebildet durch einen Mittelteil (11), der geeignet ist, in der Stütze aufgenommen zu werden und durch zwei rohrförmige Enden, von denen jedes einen konkaven Bereich aufweist, der dem Fahrer zugewandt ist, der seine Hände darauf abstützt, wenn er sich anstrengt, dadurch gekennzeichnet, daß dieser konkave Bereich nach unten gerichtet und wie folgt geformt ist: er hat einen ersten Teil (14) näher dem Mittelteil (11), mit einem kleinen Biegeradius (r), einem zweiten geradlinigen Teil (16), der mit dem ersten verbunden ist, dann einen dritten Teil (15), der mit dem zweiten verbunden ist und einen viel weiteren Biegeradius (R) bildet, der nahezu doppelt so groß wie de vorgehende ist, wobei sich der geradlinige Teil (16) über eine Strecke, die nahezu gleich der Breite der Hand des Fahrers ist, erstreckt.

2. Lenkstange nach Anspruch 1, dadurch gekennzeichnet, daß der geradlinige Teil einen Winkel zwischen 35° und 55° bezüglich einer vertikalen Linie bildet.

**Revendications**

1. Guidon de bicyclette se composant d'un tronçon intermédiaire (11) pouvant s'engager dans la pipe et de deux tronçons extrêmes tubulaires dont chacun présente une zone concave tournée vers le cycliste sur laquelle ce dernier appuie ses mains quand il fait un effort, caractérisé en ce que ladite zone concave est dirigée vers le bas et qu'elle a la forme suivante: elle a une première portion (14) plus proche du tronçon intermédiaire (11) du guidon ayant un petit rayon (r) de courbure, une seconde portion (16) rectiligne et se raccordant à la première portion, et enfin une troisième portion (15) se raccordant à la seconde et ayant un rayon de courbure (R) beaucoup plus grand, c'est-à-dire environ le double du précédent, la portion rectiligne (16) s'étendant sur un tronçon ayant presque la largeur de la main du cycliste.

2. Guidon selon la revendication 1, caractérisé en ce que la portion rectiligne forme un angle allant de 35° à 55° par rapport à une verticale.

FIG.1

12

13

11

10

10

11

12

17

FIG.2

R

14

16

18

15

35°-55°